# EUROPEAN PATENT SPECIFICATION

(11) **EP 1 520 199 B1**
(45) Date of publication and mention of the grant of the patent: **04.05.2011**
(21) Application number: 03763741.0
(22) Date of filing: 08.07.2003
(51) Int. Cl.: G02B 21/00

(54) **OPTICAL MICROSCOPE ABLE TO OPERATE A RAPID THREE DIMENSIONAL MODULATION OF THE POSITION OF THE OBSERVATION POINT**
OPTISCHES MIKROSKOP MIT DER FÄHIGKEIT ZUM BETRIEB MIT EINER SCHNELLEN DREIDIMENSIONALEN MODULATION DER POSITION DES BEOBACHTUNGSPUNKTS
MICROSCOPE OPTIQUE POUVANT EFFECTUER UNE MODULATION TRIDIMENSIONNELLE RAPIDE DE LA POSITION DU POINT D'OBSERVATION

(30) Priority: 10.07.2002 IT TO20020602
(43) Date of publication of application: 06.04.2005
(73) Proprietor: Fondazione Istituto Italiano Di Tecnologia, 16163 Genova (IT)
(72) Inventor: GIARDINI, Mario, Ettore, I-27051 Cava Manara PAVIA (IT); CORTI, Mario, Vittorio, I-20090 Segrate MILANO (IT); Botcherby, Stephen Charles Lauder, Dorking, Surrey RH 1NE (GB)
(74) Representative: Deambrogi, Edgardo
(86) International application number: PCT/EP2003/007315
(87) International publication number: WO 2004/008218

(56) References cited:
- EP-A- 0 190 650
- WO-A-02/46819
- DE-A- 19 733 193
- DE-A- 19 837 249
- US-A- 4 714 310
- US-A1- 2001 003 488
- US-A1- 2001 042 837
- US-A1- 2002 027 203
- US-A1- 2002 027 709
- US-B1- 6 268 948

## Description

The present invention relates to an optical microscope for observation of a specimen, both through an eyepiece and for use in a confocal configuration, as defined in the preamble of Claim 1.

In the observation of a specimen, for example for research in the cellular biology field, in which it is necessary to be able to focus the image on different observation planes and/or to track a particle or a cell in its free movement in the surrounding environment, it is necessary to have available optical instruments for the formation of images which allow a rapid and precise three dimensional scanning of the field of view.

In microscopes arranged to track a free particle the optical system of the microscope must be able to maintain the particle in focus while following its every movement.

Achieving these objectives by using conic scanning techniques of an observation plane, together with traditional autofocus techniques for which movement of the objective unit of the microscope or the specimen slide takes place along the optical axis as described for example in US 5 483 055 and US 4 000 417, does not allow three dimensional tracking to be effected by adjusting the focusing means in times shorter than 20ms to 1s because of the inertia of the objective unit or the specimen slide.

This applies both to traditional microscopes for direct viewing by an operator through an eyepiece system, and to confocal microscopes, in which the scanning of a confocal aperture conjugate to an observation object point allows the formation of a point-by-point image with better contrast and resolution.

In the prior art observation with three dimensional tracking of a particle can also be obtained by constructing the volumetric image of the specimen by superimposition of images detected through a two dimensional scanning of a succession of focal planes of observation. The axial scanning takes place by moving the objective of the microscope by means of an actuator, and a calculator determines the position of the particle under observation after having acquired several images in different planes. Technical solutions of this type are described in US 5 932 872 and in the article "3D Particle Tracking on the Two-Photon Microscope" by di T. Ragan, P.T-So, H. Kwon and E. Gratton appearing in the proceedings of SPIE Vol. 4262, for 2001.

DE 197 33 193 discloses a microscope with an adaptive optics system in the observation and/or illumination beam path, whereby a wave front modulator based on a reflecting optical element such as a deformable mirror is connected via beam splitters for influencing the phase and/or amplitude of a light wave in such a way that a displacement and shaping of the focus in the object space is achieved without any mechanical influence of the objective or the specimen slide.

The object of the present invention is to provide an optical microscope for observation on an arbitrary surface and three dimensional tracking of particles, which allows a rapid modulation of the position of the focus along a direction parallel to the optical axis together with scanning in an observation plane orthogonal to this axis, avoiding the disadvantages of the prior art.

According to the present invention this object is achieved by an optical microscope having the characteristics set out in Claim 1.

Particular embodiments of the invention are defined in the dependent claims. In summary the present invention is based on the principle of modifying the optical path of a light beam collected by the objective and directed towards a real image plane (in a confocal microscope) or an observation direction (for a traditional microscope) by introducing, downstream of the objective, an additional optical system which makes it possible to modulate the focal plane of the instrument without intervening in the movement of the objective unit or the specimen-carrier slide.

This system forms a supplementary optical path which comprises, in the preferred embodiment, a lens and a mirror disposed close to the focus of the lens, the mutual spacing of which along the optical axis of the system can be modified in such a way as to vary the observation plane of the specimen focussed on the image plane.

In a general optical definition which we will adopt in the following description, a system including both refracting surfaces and reflecting surfaces will be called a catadioptric system.

In an alternative embodiment the supplementary optical path comprises only mirrors, and in this case we will adopt for conformity the denomination of catoptric system.

A variant of the supplementary path, applicable both to the catadioptric systems and the catoptric system, provides for interposition of a pair of rotatable prisms between the elements of the system, which are thus maintained fixed.

Advantageously the architecture of the microscope according to the invention allows it to be formed as a traditional microscope for tracking free particles by means of conic scanning on three axes, by improving the known conic scanning system on two axes, as well as a confocal microscope for the detection of images on an arbitrary observation surface and possible tracking by three dimensional conic scanning.

Further characteristics and advantages of the invention will be explained in more detail in the following detailed description given by way of non-limitative example with reference to the attached drawings, in which:
Figure 1 is a schematic representation of a preferred embodiment of the complete optical system of a microscope according to the invention;
Figure 2 is a schematic representation of a portion of the optical system illustrated in Figure 1, according to a variant embodiment; and
Figure 3 is a schematic representation of a portion of the optical system illustrated, in an alternative embodiment.

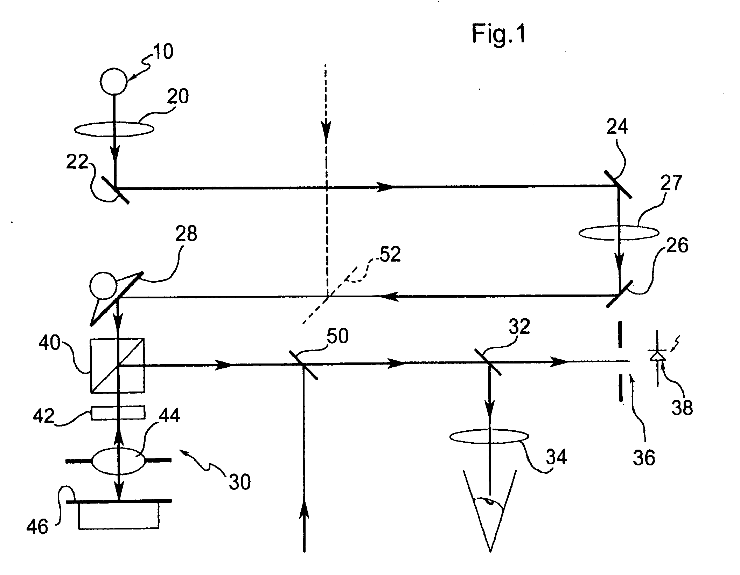

In the schematic illustration of Figure 1 an object, or more generally a specimen under observation, is indicated 10, for example illuminated by light radiation coming from a source outside the microscope and capable of diffusing incident light radiation or emitting radiation itself by fluorescence.

The optical system of the microscope comprises an objective 20, here symbolically identified as a simple lens, disposed close to the specimen 10 to collect light diffused by or emitted from it and to form a collimated or focused light beam.

The optical path of the instrument in its initial section comprises a series of fixed mirrors 22, 24, 26 for deflecting the light beam, used to fold the beam for the purpose of reducing the size of the instrument, and a field lens 27 for determination of the field of view of the image of the object under observation.

A movable mirror, indicated 28, is tiltable about two orthogonal axes by means of a piezoelectric positioner, and is operable to produce an angular deviation of the beam. This function can be performed similarly by a pair of movable mirrors, each tiltable about a single axis, or by a movable lens.

An additional optical system 30 operable to modulate the position of the specimen observation area along the optical axis is interposed in the optical path in such a way as to insert a supplementary branch of the light path.

A beam divider 32 (for example a dichroic mirror) is disposed along the optical path downstream of the system 30 for directing a portion of the beam towards a collection lens 34 (ocular) which permits direct vision through the instrument by an operator and allows the transmission of a portion of the incident beam on a confocal aperture 36 conjugate to the observation area, behind which is disposed a photodetector 38 aligned with the optical axis of the system and operable to detect the instantaneous luminous intensity of the beam.

The additional optical system 30 includes a beam divider, for example a partially reflecting mirror, or preferably a polarising prism 40 as indicated in the drawing, and a quarter wave plate 42 for converting of the polarisation of the beam, a converging lens 44 and a mirror 46 disposed close to the focus of the lens.

In a currently preferred embodiment the positions of the lens 44 and the mirror 46-disposed perpendicularly to the optical axis can vary by translation along this axis. For this purpose the lens 44 is mounted on a piezoelectric positioner and the mirror on a magnetic positioner, or vice versa. Simpler embodiments are however possible, in which only one of the two elements is movable.

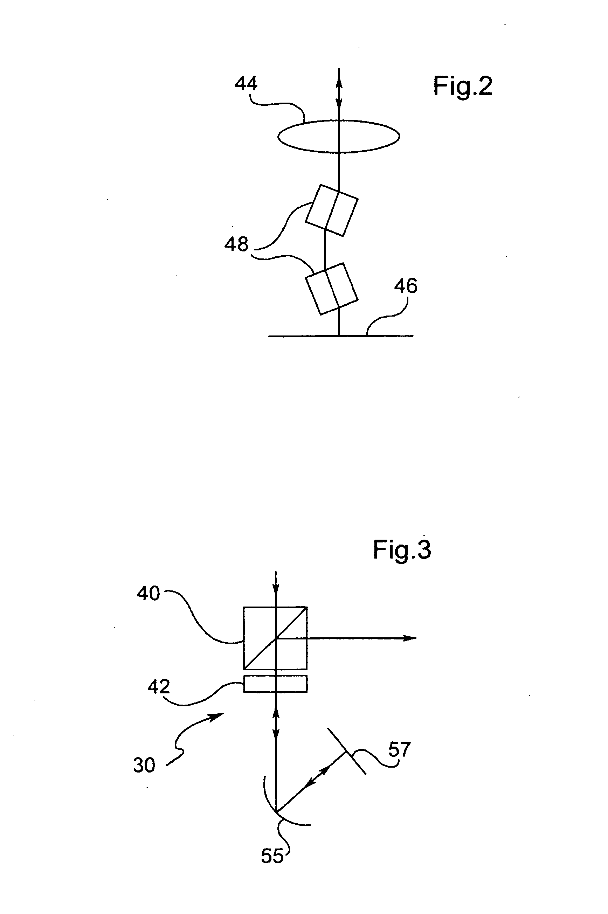

In a variant illustrated in detail in Figure 2, in which both the lens 44 and the mirror 46 are fixed, a pair of rotatable prisms 48 is interposed between the lens and the mirror in order to modify the length of the optical path of the supplementary branch.

A further beam divider 50 (in the most common form a dichroic mirror) is insertable in the optical path to allow illumination of the object 10 along the optical axis, for example by excitation of fluorescence or by capturing a particle by means of optical confinement techniques (optical tweezer). The beam divider 50 is capable of receiving a beam of illumination from an associated light source, not shown, and is able to reflect this beam along the optical axis of the system towards the objective, whilst also permitting transmission of the beam coming from the object 10, and collected by the objective, towards the real image plane or, respectively, the observation direction.

A mirror 52 possibly insertable downstream of the objective 20 and of the image collector and deflector optics (elements 22, 24, 26, 27) excludes these elements thereby permitting the microscope to be coupled to external image optics, for example an auxiliary port of an inverted microscope.

In an alternative embodiment illustrated in Figure 3, the additional optical system 30 comprises a converging mirror 55 and a plane mirror 57 disposed close to the focus of the converging mirror, translatable along the optical axis. A man skilled in the art will easily be able to put the invention into practice in the mirror-only configuration by likewise applying the constructional variant of Figure 2, interposing a pair of rotatable prisms between the mirrors to modify the length of the optical path of the supplementary branch without recourse to movement of the mirror 57.

The operation of the traditional image collection and beam bending part of the microscope described is well known to those skilled in the art and will therefore not be described in detail here.

The field lens 27, disposed in the image plane of the objective, forms an image of the pupil of the objective 20 on the movable mirror 28 and an observation area (field of view) is selected by the position assumed by the mirror 28 the variable orientation of which allows exploration of the observation plane orthogonal to the optical axis.

The assembly formed by the confocal aperture 36 and the photodetector 38 allows observation of the object 10 in the confocal configuration and the formation of a map of the intensity distribution in the observation plane upon variation in the inclination of the mirror 28.

The additional optical system 30 forming the subject of the invention allows translation of the observation point confocally conjugate with the aperture 36 in a direction parallel to the optical axis to be controlled.

In detail, the beam divider 40 intercepts the beam deflected by the mirror 28 and directs it towards the supplementary path comprising of the elements 42, 46.

The light beam traverses the polarising prism 40 and emerges with linear polarisation, the orthogonal polarisation component being lost by reflection, and the quarter wave plate 42 provides for conversion of the linear polarisation into circular polarisation. After reflection at the mirror 46, which causes an inversion of the sense of rotation of the circular polarisation, this is then converted back into linear polarisation when the beam again traverses the plate 42. Finally, the divider prism 40 reflects the entirety of the incident polarised beam emitting it along the main path towards the real image plane defined by the confocal aperture 36 or, respectively, the observation direction of the virtual image formed by the collection lens 34.

Various non-exhaustive examples of applications for which the microscope forming the subject of the invention is intended to be used include tracking of particles and/or free cells in liquids, the formation of images with confocal techniques for exploration of specimens on arbitrary surfaces, tracking and contemporaneous excitation of spatially selective fluorescence, tracking and intrinsically coaligned optical trapping of particles in liquids.

In applications for tracking of free particles by means of conic scanning techniques the position of the movable elements 28, 44, 46 (or 28, 55, 57) is varied in such a manner as to conjugate the position of the object observation point to the confocal aperture 36.

The actuators for the movable elements are arranged to regulate the orientation of the mirror 28 and to vary the spatial configuration of the system lens 44-mirror 46 (or convergent mirror 55-plane mirror 57) in a first operating mode, in such a way as to cause an alternating displacement (not necessarily periodic) of the area and of the observation plane about an observation point thus realising a three dimensional conic scanning. They are, moreover, arranged to regulate the orientation of the mirror 28 and vary the spatial configuration of the system comprising the lens 44 and mirror 46 (or convergent mirror 55-plane mirror 57) in a second operating mode, in such a way as to perform a corrective displacement of the area and the plane of observation as a function of the detected luminous intensity distribution signal emitted by the photodetector 38 to perform three dimensional tracking of the particle under observation.

Translation of the observation point confocally conjugate with the aperture 36 along a direction parallel to the optical axis, that is to say focussing on a different observation plane of the object 10, is obtained by varying the relative position between the lens 44 and the mirror 46 (or between converging mirror 55 and plane mirror 57) or, in the embodiment of Figure 2, by concordant rotation of the pair of prisms 48, in such a way as to vary the length of the optical path between lens and mirror (between mirrors respectively).

The position of the observation point (field of view) is modulated along the optical axis of the system (generally indicated Z axis) and over a pair of axes of an observation plane orthogonal to it (generally indicated X and Y) by controlling the movement of the mirror 28 and the catadioptric system formed by the lens 44 and the mirror 46 (or the catoptric system formed by the converging mirror 55 and plane mirror 57) through associated actuators (not shown).

If the modulation is periodic according to a sinusoidal law at a frequency f, by symmetry of the system the intensity of the light collected by the photodetector 38 varies at a frequency 2f, equal to twice the frequency of modulation. If, for example, the object under observation is displaced along a modulation axis, a component appears in the signal detected at the modulation frequency f the phase of which provides the sign of the displacement.

By detecting the signal synchronously with respect to the modulation signal an analogue signal proportional to the correction needed to impart to the movable elements 28, 44, 46 (or 28, 55, 57) to realign the observation point to the object is therefore obtained from the photodetector 38.

With respect to the entirely or partially digital solutions, the entirely analogue processing of the signal detected and the control signal of the actuators advantageously allows tracking to be achieved in very short times since it is not necessary for the A/D conversion time, the calculation time and/or the D/A conversion time to elapse, and greater precision is obtained by not having the intervention of quantisation noise on the determination of the position of the object point. There are thus three analogue signals available which are proportional to the position of the object on the three axes X Y and Z respectively.

By separating the signals relating to the three axes in frequency and/or phase (for example by modulating the position of the observation point on the plane orthogonal to the optical axis in quadrature at the same frequency, so that circumferential exploration of the plane is obtained, and by modulating the position of the observation point along the optical axis at a different frequency) it is possible to effect tracking of the object contemporaneously along the three axes.

In applications for exploration of a specimen on an arbitrary surface, the position of the movable elements 28, 44, 46 (or 28, 55, 57) is regulated in such a way as to conjugate with the confocal aperture 36 an observation object point the position of which in space varies according to a predetermined rule.

The actuators for the movable elements are therefore arranged to regulate the orientation of the mirror 28 and to vary the spatial configuration of the lens system 44 - mirror 46 (or convergent mirror 55 - plane mirror 57) in a third operating mode, in such a way as to cause three-dimensional displacement of the observation point on a curve (path) belonging to the predetermined observation surface.

The images of a plurality of observation points collected from photodetector 38 are transmitted to an associated processing unit (not shown) for reconstruction of a complete image according to known techniques.

Naturally, the principle of the invention remaining the same, the embodiments and details of construction can be widely varied with respect to what has been described and illustrated purely by way of non-limitative example, without by this departing from the scope of protection defined in the annexed claims.

In particular, other supplementary branches could be added to the system, comprising an additional optical system as described, downstream thereof, to superimpose other regulations along the optical axis.

## Claims

1. An optical microscope for observation of a specimen (10) capable of diffusing or emitting a beam of light rays, including a main optical system for the formation of a real or virtual image of an area of observation of the specimen (10), comprising:
a main optical path from an objective (20) towards a real image plane or, respectively, towards the observation direction of a virtual image, and
an additional optical system (30) interposed along the said optical path, operable to modulate the position of the area of observation of the specimen (10) along the optical axis, the image of which is formed or observed at focus, the said system including:
- optical beam divider means (40) operable to divert the said beam from the main optical path towards a supplementary branch of the path; and
- an optical system (44, 46; 55, 57) of variable configuration operable to modulate the length of the supplementary path,
the said divider means (40) being operable to reintroduce the beam emerging from the said variable configuration system (44, 46; 55, 57) into the said main path towards the real image plane or, respectively, the observation direction of the virtual image,
wherein the microscope includes actuator means operable to move the said variable configuration system (44, 46; 55, 57) in predetermined manner,
**characterised in that** movable beam diverter means (28) are interposed along the main optical path, which are operable to direct images of a selected area of the observation plane of the specimen (10) towards the said real image plane or the said observation direction, and
**in that** the said variable configuration system for modulating the position of the said area of observation of the specimen (10) along the optical axis comprises a converging lens (44) or a converging mirror (55) and a mirror (46; 57) positioned close to the focus of said converging lens (44) or mirror (55) and perpendicularly of the optical axis.

2. A microscope according to Claim 1, **characterised in that** it includes photodetector means (38) disposed close to the real image plane of the main optical system and aligned with the optical axis of the system, for instantaneous detection of the luminous intensity of the beam,
and **in that** the said actuator means are arranged to regulate the orientation of the said beam diverter means (28) and to vary the spatial configuration of the variable configuration system (44, 46; 55, 57) in a first operating mode, in such a way as to cause an alternating displacement of the area and plane of observation about an observation point thus achieving a three dimensional scanning.

3. A microscope according to Claim 2, **characterised in that** the actuator means are further arranged to regulate the orientation of the said beam diverter means (28) and to vary the spatial configuration of the variable configuration system (44, 46; 55, 57) in a second operating mode, in such a way as to perform a corrective displacement of the area and observation plane as a function of the signal emitted by the said photodetector means (38) to perform three dimensional tracking of an object under observation.

4. A microscope according to any of Claims 1 to 3, **characterised in that** it includes a confocal aperture (36) conjugate with an observation point, operable to allow transmission of a portion of the light beam towards photodetector means (38) disposed downstream of the said aperture (36) and aligned with the optical axis of the system,
and **in that** the actuator means are arranged to regulate the orientation of the said beam diverter means (28) and to vary the spatial configuration of the variable configuration system (44, 46; 55, 57) in a third operating mode in such a way as to cause a three dimensional displacement of the observation point in a predetermined observation path,
the images of a plurality of observation points collected by the said photodetector means (38) being transmitted to associated processor means for reconstruction of a complete image.

5. A microscope according to any preceding claim, **characterised in that** the said variable configuration system is a catadioptric system comprising a converging lens (44) and a mirror (46).

6. A microscope according to any of claims 1 to 4, **characterised in that** the said variable configuration system is a catoptric system comprising a first converging mirror (55) and a second plane mirror (57) .

7. A microscope according to Claim 5 or Claim 6, **characterised in that** in the said beam divider means comprise a polarising prism (40).

8. A microscope according to Claim 5 or Claim 6, **characterised in that** the said beam divider means comprise a dichroic mirror.

9. A microscope according to Claim 5 or Claim 6, **characterised in that** the said beam divider means comprise a partially reflecting mirror.

10. A microscope according to Claim 5 or Claim 6, **characterised in that** the said additional optical systems (30) further includes a quarter wave plate (42) interposed between the said beam divider means (40) and the said variable configuration system (44, 46; 55, 57) operable to perform a conversion of the polarisation of the incident beam.

11. A microscope according to Claim 5, **characterised in that** the said actuator means are operable to vary the relative distance between the lens (44) and mirror (46).

12. A microscope according to Claim 11, **characterised in that** the said actuator means comprise a magnetic or piezoelectric positioner operable to cause translation of the lens (44) along the optical axis.

13. A microscope according to Claim 11, **characterised in that** the said actuator means comprise a magnetic or piezoelectric positioner operable to cause translation of the mirror (46) along the optical axis.

14. A microscope according to Claim 6, **characterised in that** the said actuator means comprise a magnetic or piezoelectric positioner operable to cause translation of the plane mirror (57) along the optical axis so as to vary the distance thereof from the converging mirror (55).

15. A microscope according to Claim 5, **characterised in that** the catadioptric system comprise a pair of rotatable prisms (48) interposed between the lens (44) and mirror (46).

16. A microscope according to Claim 6, **characterised in that** the catoptric system comprises a pair of rotatable prisms (48) interposed between the converging mirror (55) and the plane mirror (57).

17. A microscope according to Claim 15 or Claim 16, **characterised in that** the said actuator means are arranged to command rotation of the said pair of prisms (48) by virtue of which the length of the supplementary branch of the optical path is varied.

18. A microscope according to any preceding claim, in which the said movable beam diverter comprise a movable mirror (28) capable of rotating about two orthogonal axes.

19. A microscope according to any of claims from 1 to 17, in which the said beam diverter means include a pair of independent movable mirrors capable of rotating about respective orthogonal axes.

20. A microscope according to Claim 18 or Claim 19, in which each movable mirror is moved by a respective piezoelectric or magnetic positioner.

21. A microscope according to any preceding claim, including an ocular optical system (32, 34) for observation by an operator.

22. A microscope according to any preceding claim, including means for coaxial illumination of the sample, which include a source of illumination and beam divider means (50) in the optical path and capable of receiving a beam of light from the source, the said beam divider means (50) being operable to reflect the light beam along the optical axis of the system towards the objective (20) and to permit transmission towards the real image plane or, respectively, the direction of observation of the light beam collected by the objective (20).

23. A microscope according to any preceding claim, including a reflecting element (52) insertable between the objective (20) and the said beam diverter means (28), for coupling the microscope to external imaging optics and exclusion of the beam collected by the objective (20).

## Patentansprüche

1. Optisches Mikroskop zum Beobachten einer Probe (10), welches imstande ist, einen Strahl von Lichtstrahlen zu streuen oder zu emittieren, umfassend ein optisches Hauptsystem zum Erzeugen eines realen oder eines Virtuellen Bildes eines Beobachtungsbereichs der Probe (10), umfassend:
einen optischen Hauptpfad von einem Objektiv (20) in Richtung einer Realbildebene beziehungsweise in Richtung der Beobachtungsrichtung eines virtuellen Bildes, und
ein entlang des optischen Pfades eingefügtes zusätzliches optisches System (30), welches betreibbar ist, um die Position des Beobachtungsbereichs der Probe (10) entlang der optischen Achse zu modulieren, wobei dessen Bild an einem Fokus erzeugt oder beobachtet wird, wobei das System umfasst:
- optische Strahlteilermittel (40), welche betreibbar sind, um den Strahl von dem optischen Hauptpfad in Richtung eines Ergänzungszweigs des Pfades abzulenken; und
- ein optisches System (44, 46; 55, 57) von variabler Konfiguration, welches betreibbar ist, um die Länge des Ergänzungspfades zu modulieren, wobei die Teilermittel (40) betreibbar sind, um den Strahl, welcher aus dem System (44, 46; 55, 57) mit variabler Konfiguration austritt, in den Hauptpfad in Richtung der Realbildebene beziehungsweise der Beobachtungsrichtung des virtuellen Bildes wieder einzuführen,
wobei das Mikroskop Betätigungsmittel umfasst, welche betreibbar sind, um das System (44, 46; 55, 57) mit variabler Konfiguration in einer vorbestimmten Weise zu bewegen,
**dadurch gekennzeichnet,**
**dass** bewegliche Strahlablenkmittel (28) entlang des optischen Hauptpfads eingefügt sind, welche betreibbar sind, um Bilder eines Auswahlbereichs der Beobachtungsebene der Probe (10) in Richtung der Realbildebene oder der Beobachtungsrichtung zu lenken, und
**dass** das System mit variabler Konfiguration zum Modulieren der Position des Beobachtungsbereichs der Probe (10) entlang der optischen Achse eine Konvergenzlinse (44) oder einen Konvergenzspiegel (55) und einen Spiegel (46; 57) umfasst, welcher nahe dem Fokus der Konvergenzlinse (44) oder des -spiegels (55) und senkrecht zur optischen Achse positionrert ist.

2. Mikroskop nach Anspruch 1, **dadurch gekennzeichnet,**
**dass** es Photodetektormittel (38) umfasst, welche nahe der Realbildebene des optischen Hauptsystems angeordnet sind und mit der optischen Achse des Systems ausgerichtet sind, um die Lichtstärke des Strahls sofort zu detektieren,
und **dass** die Betätigungsmittel angeordnet sind, um die Ausrichtung der Strahlablenkmittel (28) einzustellen und um die räumliche Konfiguration des Systems (44, 46; 55, 57) mit variabler Konfiguration in einem ersten Betriebsmodus derart zu variieren, dass eine abwechselnde Verlagerung des Beobachtungsbereichs und der Beobachtungsebene um einen Beobachtungspunkt verursacht wird, wodurch ein dreidimensionales Abtasten erreicht wird.

3. Mikroskop nach Anspruch 2, **dadurch gekennzeichnet,**
**dass** die Betätigungsmittel ferner angeordnet sind, um die Ausrichtung der Strahlablenkmittel (28) einzustellen und um die räumliche Konfiguration des Systems (44, 46; 55, 57) mit variabler Konfiguration in einem zweiten Betriebsmodus derart zu variieren, dass eine korrigierende Verlagerung des Beobachtungsbereichs und der Beobachtungsebene als eine Funktion des durch die Photodetektormittel (38) emittierten Signals ausgeführt wird, um ein dreidimensionales Verfalgen eines Beobachtungsobjektes auszuführen.

4. Mikroskop nach einem der Ansprüche 1 bis 3, **dadurch gekennzeichnet, dass** es eine konfokale Öffnung (36) konjugiert mit einem Beobachtungspunkt umfasst, welche betreibbar ist, um Übertragung eines Teils des Lichtstrahls in Richtung der Phatadetektarmittel (38) zu ermöglichen, welche stromabwärts der Öffnung (36) angeordnet sind und mit der optischen Achse des Systems ausgerichtet sind,
und dass die Betätigungsmittel angeordnet sind, um die Ausrichtung der Strahlablenkmittel (28) einzustellen und um die räumliche Konfiguration des Systems (44, 46; 55, 57) mit variabler Konfiguration in einem dritten Betriebsmodus derart zu variieren, dass eine dreidimensionale Verlagerung des Beobachtungspunkts in einem vorbestimmten Beobachtungspfad verursacht wird,
wobei die Bilder von einer Mehrzahl von Beobachtungspunkten, welche durch die Photodetektormittel (38) gesammelt wurden, an zugehörige Verarbeitungsmittel zur Rekonstruktion eines vollständigen Bildes übermittelt werden.

5. Mikroskop nach einem der vorhergehenden Ansprüche, **dadurch gekennzeichnet,**
**dass** das System mit variabler Konfiguration ein katadioptrisches System ist, welches eine Konvergenzlinse (44) und einen Spiegel (46) umfasst.

6. Mikroskop nach einem der Ansprüche 1 bis 4, **dadurch gekennzeichnet, dass** das System mit variabler Konfiguration ein kataptrisches System ist, welches einen ersten Konvergenzspiegel (55) und einen zweiten Planspiegel (57) umfasst.

7. Mikroskop nach Anspruch 5 oder Anspruch 6, **dadurch gekennzeichnet, dass** die Strahlteilermittel ein Polarisationsprisma (40) umfassen.

8. Mikroskop nach Anspruch 5 oder Anspruch 6, **dadurch gekennzeichnet, dass** die Strahlteilermitkel einen dichroitischen Spiegel umfassen.

9. Mikroskop nach Anspruch 5 oder Anspruch 6, **dadurch gekennzeichnet, dass** die Strahlteilermittel einen teilreflektierenden Spiegel umfassen.

10. Mikroskop nach Anspruch 5 oder Anspruch 6, **dadurch gekennzeichnet, dass** das zusätzliche optische System (30) ferner eine Viertelwellenplatte (42) umfasst, weiche zwischen den Strahlteilermitteln (40) und dem System (44, 46; 55, 57) mit variabler Konfiguration eingefügt ist, welche betreibbar ist, um eine Umwandlung der Polarisation des einfallenden Strahls durchzuführen.

11. Mikroskop nach Anspruch 5, **dadurch gekennzeichnet,**
**dass** die Betätigungsmittel betreibbar sind, um die relative Entfernung zwischen der Linse (44) und dem Spiegel (46) zu variieren.

12. Mikroskop nach Anspruch 11, **dadurch gekennzeichnet,**
**dass** die Betätigungsmittel einen magnetischen oder piezolektrischen Positionierer umfassen, welcher betreibbar ist, um eine Translation der Linse (44) entlang der optischen Achse zu veranlassen.

13. Mikroskop nach Anspruch 11, **dadurch gekennzeichnet,**
**dass** die Betätigungsmittel einen magnetischen oder piezolektrischen Positionierter umfassen, welcher betreibbar ist, um eine Translation des Spiegels (46) entlang der optischen Achse zu veranlassen.

14. Mikroskop nach Anspruch 6, **dadurch gekennzeichnet,**
**dass** die Betätigungsmittel einen magnetischen oder piezolektrischen Positionierer umfassen, welcher betreibbar ist, um eine Translation des Planspiegels (57) entlang der optischen Achse derart zu veranlassen, dass die Entfernung desselben von dem Konvergenzspiegel (55) variiert wird.

15. Mikroskop nach Anspruch 5, **dadurch gekennzeichnet,**
**dass** das katadioptrische System ein Paar von drehbaren Prismen (48) umfasst, welche zwischen der Linse (44) und dem Spiegel (46) eingefügt sind.

16. Mikroskop nach Anspruch 6, **dadurch gekennzeichnet,**
**dass** das katoptrische System ein Paar von drehbaren Prismen (48) umfasst, welche zwischen dem Konvergenzspiegel (55) und dem Planspiegel (57) eingefügt sind.

17. Mikroskop nach Anspruch 15 oder Anspruch 16, **dadurch gekennzeichnet, dass** die Betätigungsmittel angeordnet sind, um eine Drehung des Paars von Prismen (48) zu veranlassen, wodurch die Länge des Ergänzungszweigs des optischen Pfads variiert wird.

18. Mikroskop nach einem der vorhergehenden Ansprüche,
wobei der bewegliche Strahlablenker einen beweglichen Spiegel (28) umfasst, welcher imstande ist, sich um zwei orthogonale Achsen zu drehen.

19. Mikroskop nach einem der Ansprüche 1 bis 17,
wobei die Strahlablenkmittel ein Paar von unabgängig beweglichen Spiegeln umfassen, weiche imstande sind, sich um jeweilige orthogonale Achsen zu drehen.

20. Mikroskop nach Anspruch 18 oder Anspruch 19,
wobei jeder bewegliche Spiegel durch einen jeweiligen piezoelektrischen oder magnetischen Positionierer bewegt wird.

21. Mikroskop nach einem der vorhergehenden Ansprüche,
umfassend ein optisches Okularsystem (32, 34) zur Beobachtung durch einen Operator.

22. Mikroskop nach einem der vorhergehenden Ansprüche,
umfassend Mittel zur koaxialen Beleuchtung der Probe, welche in dem optischen Pfad eine Beleuchtungsquelle und Strahlteilermittel (50) umfassen, und welche imstande sind, einen Lichtstrahl von der Quelle zu empfangen, wobei die Strahlteilermittel (50) betreibbar sind, um den Richtstrahl entlang der optischen Achse des Systems in Richtung des Objektivs (20) zu reflektieren, und um eine Übertragung in Richtung der Realbildebene beziehungsweise der Beobachtungsrichtung des durch das Objektiv (20) gesammelten Lichtstrahles zu ermöglichen.

23. Mikroskop nach einem der vorhergehenden Ansprüche,
umfassend ein Reflektorelement (52), welches zwischen dem Objektiv (20) und den Strahlablenkmitteln (28) einsetzbar ist, zum Ankoppeln des Mikroskops an eine externe Abbildungsaptik und zum Ausschließen des durch das Objektiv (20) gesammelten Strahls.

## Revendications

1. Microscope optique pour l'observation d'un spécimen (10) pouvant diffuser ou émettre un faisceau de rayons lumineux, incluant un système optique principal pour la formation d'une image réelle ou virtuelle d'une zone d'observation du spécimen (10), comprenant :
un chemin optique principal depuis un objectif (20) vers un plan d'image réelle ou, respectivement, vers la direction d'observation d'une image virtuelle, et
un système optique additionnel (30) intercalé le long dudit chemin optique, pouvant fonctionner pour moduler la position de la zone d'observation du spécimen (10) le long de l'axe optique, dont l'image est formée ou observée au point focal, ledit système incluant :
des moyens de diviseur de faisceau optique (40) pouvant fonctionner pour dériver ledit faisceau du chemin optique principal vers une branche supplémentaire du chemin ; et
un système optique (44, 46; 55, 57) de configuration variable pouvant fonctionner pour moduler la longueur du chemin supplémentaire,
lesdits moyens de diviseur de faisceau optique (40) pouvant fonctionner pour réintroduire le faisceau émergeant dudit système à configuration variable (44, 46; 55, 57) dans ledit chemin principal vers le plan d'image réelle ou, respectivement, la direction d'observation de l'image virtuelle,
dans lequel le microscope inclut des moyens d'actionneur pouvant fonctionner pour déplacer ledit système à configuration variable (44, 46; 55, 57) de manière prédéterminée,
**caractérisé en ce que** des moyens de déviation de faisceau mobiles (28) sont intercalés le long du chemin optique principal, qui peuvent fonctionner pour diriger des images d'une zone sélectionnée du plan d'observation du spécimen (10) vers ledit plan d'image réelle ou ladite direction d'observation et
**en ce que** ledit système à configuration variable pour moduler la position de ladite zone d'observation du spécimen (10) le long de l'axe optique comprend une lentille convergente (44) ou un miroir convergent (55), et un miroir (46; 57) positionné près du point focal de ladite lentille convergente (44) ou dudit miroir convergent (55) et perpendiculairement à l'axe optique.

2. Microscope selon la revendication 1, **caractérisé en ce qu'**il inclut des moyens de photodétecteur (38) disposés près du plan d'image réelle du système optique principal et aligné avec l'axe optique du système, pour une détection instantanée de l'intensité lumineuse du faisceau,
et **en ce que** lesdits moyens d'actionneur sont agencés pour réguler l'orientation desdits moyens de déviation de faisceau (28) et pour faire varier la configuration spatiale du système à configuration variable (44, 46; 55, 57) dans un premier mode opérationnel, de façon à causer un déplacement alternatif de la zone et du plan d'observation autour d'un point d'observation obtenant ainsi un balayage tridimensionnel.

3. Microscope selon la revendication 2, **caractérisé en ce que** les moyens d'actionneur sont en outre agencés pour réguler l'orientation desdits moyens de déviation de faisceau (28) et pour faire varier la configuration spatiale du système à configuration variable (44, 46; 55, 57) dans un second mode opérationnel, de façon à réaliser un déplacement correctif de la zone et du plan d'observation en fonction du signal émis par lesdits moyens de photodétecteur (38) pour réaliser un pistage tridimensionnel d'un objet sous observation.

4. Microscope selon l'une quelconque des revendications 1 à 3, **caractérisé en ce qu'**il inclut une ouverture confocale (36) conjuguée avec un point d'observation, pouvant fonctionner pour permettre la transmission d'une partie du faisceau lumineux vers les moyens de photodétecteurs (38) disposés en amont de ladite ouverture (36) et alignés avec l'axe optique du système,
et **en ce que** les moyens d'actionneur sont agencés pour réguler l'orientation desdits moyens de déviation de faisceau (28) et pour faire varier la configuration spatiale du système à configuration variable (44, 46; 55, 57) dans un troisième mode opérationnel de façon à causer un déplacement tridimensionnel du point d'observation dans un chemin d'observation prédéterminé,
les images d'une pluralité de points d'observation collectées par lesdits moyens de photodétecteurs (38) étant transmises à des moyens de traitement associés pour la reconstruction d'une image complète.

5. Microscope selon l'une quelconque des revendications précédentes, **caractérisé en ce que** ledit système à configuration variable est un système catadioptrique comprenant une lentille convergente (44) et un miroir (46).

6. Microscope selon l'une quelconque des revendications 1 à 4, **caractérisé en ce que** ledit système à configuration variable est un système catadioptrique comprenant un premier miroir convergent (55) et un second miroir plan (57).

7. Microscope selon la revendication 5 ou la revendication 6, **caractérisé en ce que** lesdits moyens de division de faisceau comprennent un prisme polarisant (40).

8. Microscope selon la revendication 5 ou la revendication 6, **caractérisé en ce que** lesdits moyens de division de faisceau comprennent un miroir dichroïque.

9. Microscope selon la revendication 5 ou la revendication 6, **caractérisé en ce que** lesdits moyens de division de faisceau comprennent un miroir semi-réfléchissant.

10. Microscope selon la revendication 5 ou la revendication 6, **caractérisé en ce que** lesdits systèmes optiques additionnels (30) incluent en outre une plaque quart d'onde (42) intercalée entre lesdits moyens de division de faisceau (40) et ledit système à configuration variable (44, 46; 55, 57) pouvant fonctionner pour réaliser une conversion de la polarisation du faisceau incident.

11. Microscope selon la revendication 5, **caractérisé en ce que** lesdits moyens d'actionneur peuvent fonctionner pour faire varier la distance relative entre la lentille (44) et le miroir (46).

12. Microscope selon la revendication 11, **caractérisé en ce que** lesdits moyens d'actionneur comprennent un positionneur magnétique ou piézoélectrique pouvant fonctionner pour provoquer la translation de la lentille (44) le long de l'axe optique.

13. Microscope selon la revendication 11, **caractérisé en ce que** lesdits moyens d'actionneur comprennent un positionneur magnétique ou piézoélectrique pouvant fonctionner pour provoquer la translation du miroir (46) le long de l'axe optique.

14. Microscope selon la revendication 6, **caractérisé en ce que** lesdits moyens d'actionneur comprennent un positionneur magnétique ou piézoélectrique pouvant fonctionner pour provoquer la translation du miroir plan (57) le long de l'axe optique de façon à faire varier la distance de celui-ci au miroir convergent (55).

15. Microscope selon la revendication 5, **caractérisé en ce que** le système catadioptrique comprend une paire de prismes tournants (48) intercalés entre le miroir (44) et le miroir (46).

16. Microscope selon la revendication 6, **caractérisé en ce que** le système catadioptrique comprend une paire de prismes tournants (48) intercalés entre le miroir convergent (55) et le miroir plan (57).

17. Microscope selon la revendication 15 ou la revendication 16, **caractérisé en ce que** lesdits moyens d'actionneur sont agencés pour commander la rotation de ladite paire de prismes (48) à l'aide desquels on fait varier la longueur de la branche supplémentaire du chemin optique.

18. Microscope selon l'une quelconque des revendications précédentes, dans lequel ledit déviateur de faisceau mobile comprend un miroir mobile (28) pouvant tourner autour de deux axes orthogonaux.

19. Microscope selon l'une quelconque des revendications 1 à 17, dans lequel lesdits moyens de déviation de faisceau incluent une paire de miroirs mobiles indépendants pouvant tourner autour d'axes orthogonaux respectifs.

20. Microscope selon la revendication 18 ou la revendication 19, dans lequel chaque miroir mobile est déplacé par un positionneur magnétique ou piézoélectrique respectif.

21. Microscope selon l'une quelconque des revendications précédentes, incluant un système optique oculaire (32, 34) pour l'observation par un opérateur.

22. Microscope selon l'une quelconque des revendications précédentes, incluant des moyens pour l'éclairage coaxial de l'échantillon, qui incluent une source d'éclairage et des moyens de division de faisceau (50) dans le chemin optique et pouvant recevoir un faisceau lumineux depuis la source, lesdits moyens de division de faisceau (50) pouvant fonctionner pour réfléchir le faisceau lumineux le long de l'axe optique du système vers l'objectif (20) et pour permettre la transmission vers le plan d'image réelle ou, respectivement, la direction d'observation du faisceau lumineux collecté par l'objectif (20).

23. Microscope selon l'une quelconque des revendications précédentes, incluant un élément réfléchissant (52) pouvant être inséré entre l'objectif (20) et lesdits moyens de déviation de faisceau (28), pour coupler le microscope à des optiques d'imagerie extérieure et exclure le faisceau collecté par l'objectif (20).
